# EUROPEAN PATENT APPLICATION

(11) **EP 3 934 237 A1**
(43) Date of publication of application: **05.01.2022**
(21) Application number: 21179581.0
(22) Date of filing: 15.06.2021
(51) Int. Cl.: H04N 5/262

(54) **SMART CROPPING OF IMAGES**

(30) Priority: 19.06.2020 US 202016906722
(71) Applicant: Apple Inc., Cupertino, CA 95014 (US)
(72) Inventor: KALU, Kalu O., Cupertino, CA, 95014 (US); TARTAVEL, Guillaume, Cupertino, CA, 95014 (US)
(74) Representative: Lang, Johannes

(57) **Abstract**

Devices, methods, and non-transitory program storage devices are disclosed to provide for automatic cropping of images, given a requested target dimensions and/or aspect ratio, e.g., by using saliency maps to identify the parts of the image containing the most important content-and ensuring that such content is, if possible, included in a determined cropped region from the image. In particular, the devices, methods, and non-transitory program storage devices disclosed herein may: define a first region of interest (ROI) in a given image that is most essential to include in an automatically-determined cropped region; define a second ROI in the given image that would be preferable to include in the automatically-determined cropped region; and then determine a cropped region from the given image, based on the requested target dimensions and/or aspect ratio, that attempts to maximize an amount of overlap between the determined cropped region and the first and/or second ROIs.

## Description

### TECHNICAL FIELD

This disclosure relates generally to the field of digital image processing. More particularly, but not by way of limitation, it relates to techniques for automatically cropping images in an intelligent fashion, e.g., based on image content, as well as the aspect ratio, resolution, orientation, etc., of the various display screens and/or display areas that such images may be displayed on.

### BACKGROUND

The advent of mobile, multifunction devices, such as smartphones and tablet devices, has resulted in a desire for high-quality display screens and small form factor cameras capable of generating high levels of image quality in near-real time for integration into such mobile, multifunction devices. Increasingly, as users rely on these multifunction devices as their primary displays and cameras for day-to-day use, users are able to capture and view images with image quality levels close to (or exceeding) what they have become accustomed to from the use of dedicated-purpose display monitors and camera devices.

As such, users may often want to use such captured images (or images obtained from other sources), e.g., as a part of a screensaver and/or as a "wallpaper" or "background image" across any of their devices having displays. However, many users have various devices with different display screen sizes, orientations, aspect ratios, resolutions, etc., and may want to use one or more of their images as a background image across any of their devices. Additionally, in some cases, one or more applications installed on a user's device may also wish to display such images within a designated content area, e.g., within a predetermined region on the display, as part of a user interface (UI) or other multimedia presentation application. In such cases, each designated content area for each application may also have its own constraints as to the size, orientation, aspect ratio, resolution, etc., of the image content that may be used within the designated content area(s) of the application, i.e., independent of the overall device display's screen size, orientation, aspect ratio, resolution, etc.

Due the variance in the aforementioned device display properties and application-specific content area constraints, such as display screen size, orientation, aspect ratio, designated content area dimensions, and resolution, it is unlikely that a single crop taken from one of a user's images would provide for a visually-pleasing image across each of a user's devices and applications, in each of such device's possible orientations. For example, it may be beneficial and visually-pleasing for an image crop that is to be used on a user's device to encompass as much of the parts of the image that have been deemed important, salient, and/or otherwise relevant (such parts of the image also referred to collectively herein as, "important") as possible. It may be also be beneficial and visually-pleasing for an image crop that is to be used on a user's device to be able to take into account regions on the device's display that it would be preferable that the important parts of the image did not overlap with (e.g., it would likely not be visually-pleasing if a determined crop that is to be used for a background image on a device display caused the important parts of the cropped image to be overlaid by text, titles, clocks, battery indicators, or other display elements that are present on the display screen of the device during the normal operation of the device's operating system).

Thus, it would be beneficial to have methods, computer-executable instructions, and systems that provide for the automatic and intelligent cropping of images, e.g., based on image content, as well as the aspect ratio, resolution, orientation, etc., of the various display screens and designated content areas that such images may be displayed on. It would further be desirable to be able to automatically calculate scores for such intelligent crops, such that an entity requesting the crop, e.g., an end user or an application, may be able to quantify the likely quality of the crop for use on a particular device display screen in a particular orientation or within a particular designated content area.

### SUMMARY

Devices, methods, and non-transitory program storage devices are disclosed to provide for the automatic and intelligent cropping of images, given requested target dimensions for a cropped region, from which an aspect ratio and/or orientation may be determined. In some embodiments, a location of a requested cropped region within an image may be determined, e.g., by using saliency maps or other object detection and/or classifier systems to identify the parts of the image containing the most important or relevant content-and ensuring that such content is, if possible, included in a determined cropped region from the image (such determined cropped region may also referred to herein as a "cropping box" or simply a "crop").

In particular, the various devices, methods, and non-transitory program storage devices disclosed herein may be able to: define a first region of interest (ROI) in a given image that is most essential to include in an automatically-determined cropped region; define a second (e.g., larger) ROI in the given image that would be preferable to include in the automatically-determined cropped region; and then determine a cropped region from the given image, based on a requested aspect ratio, that attempts to maximize an amount of overlap between the determined cropped region and the first and/or second ROIs.

In preferred embodiments, a cropping score is determined for the determined crop, based, at least in part, on how much of the first ROI and second ROI are enclosed by the determined crop. In some cases, an interpolation operation, such as a linear interpolation, may be used in the determination of the cropping score for a given crop, e.g., an interpolation between two predetermined cropping scores assigned to crops that enclose certain defined regions of the image (e.g., defined regions, such as the first ROI, the second ROI, or the entire image extent). The cropping score may be used to help an end user or application assess whether the determined crop is actually a good candidate to be used, e.g., as part of a screensaver, as a wallpaper or background image, or for display in a designated content area on the display of a particular device.

According to other embodiments, additional crops may be determined for a given image using the techniques disclosed herein, e.g., multiple crops for a given image having different target dimensions, aspect ratios, different orientations, different resolution requirements, etc., may each be returned (along with a respective cropping score) to a requesting end user or application.

According to still other embodiments, the first ROI may be determined to enclose all portions of an image having a greater than a first threshold saliency score, while the second ROI may be determined to encompass all portions of image having greater than a second threshold saliency score, wherein, e.g., the second threshold saliency score is lower than the first threshold saliency score. Due to having a lower threshold saliency score, the second ROI will thus necessarily be larger than (and possibly encompass) the first ROI. Each ROI may be contiguous or non-contiguous within the image. As alluded to above, the first ROI may represent content deemed 'essential' to include in the determined crop, while the second ROI may represent content deemed 'preferable' to include in the determined crop. According to some embodiments, the more of the original image that is included in the determined crop, the higher the cropping score for the determined crop will be, with the cropping score reaching a maximum value if the entire original image (or at least the entire horizontal extent or entire vertical extent of the image) is able to be included in the determined crop.

According to some cropping scoring schemes, the cropping score for a given determined cropped region is set to be at least a first minimum score if the first ROI is completely enclosed in the determined cropped region, and the cropping score is set to be at least a second minimum score if the second ROI is completely enclosed in determined cropped region, wherein the second minimum score is greater than the first minimum score. In other words, if a determined cropped region includes the "essential" parts of the image (i.e., the first ROI), it will be assigned a score of at least X, whereas, if the determined cropped region includes both the "essential" and the "preferred" parts of the image (i.e., the second ROI), it will be assigned a score of at least Y, wherein Y is greater than X. In other cropping scoring schemes, the image may be divided into a number of ranked regions, wherein each ranked region is assigned a particular weighting score, and wherein the assigned cropping score can comprise a weighted sum of the portions of each ranked region encompassed by the determined cropped region. In some cropping scoring schemes, if the determined cropped region is co-extensive with the original image (i.e., includes all the content from the original image) in at least one dimension, or if the determined cropped region encompasses all identified ROIs, then the determined cropped region may be assigned a maximum cropping score, e.g., a 100% score. In some cases, a crop may not be used (or recommended for use to an end user or requesting application) unless its cropping score is greater than a minimum score threshold, e.g., a 50% score.

In still other embodiments, the requested crop may also include a specification of a "focus region," e.g., in addition to a requested aspect ratio, the requested crop may further specify a portion of the determined cropped region (e.g., the bottom 75% of the cropped region, the bottom 50% of the cropped region, etc.), i.e., the portion referred to herein as a focus region, wherein the cropping score for the determined region is further determined based, at least in part, on an amount of the first and/or second ROI that is enclosed by the focus region. In other words, if parts of the first and/or second ROI that are included in the determined cropped region extend beyond the specified focus region, it may negatively impact the cropping score of the determined cropped region. For example, in some cropping scoring schemes, a determined cropped region may be given a cropping score lower than the minimum threshold score (and, thus, possibly will not be recommended for use to end users or applications) if any portion of the first ROI (or some other ROI) in the determined cropped region extends beyond the designated boundaries of the focus region.

In some embodiments, in addition to (or in lieu of) saliency maps, one or more of: object detection boxes, face detection boxes, or face recognition boxes generated based on the image may be used in the determination of the first or second ROIs.

In still other embodiments, when determining the dimensions of the determined cropped region, at least one of the width or height of the cropped region may be selected to match the corresponding dimension of the image.

Various non-transitory program storage device embodiments are disclosed herein. Such program storage devices are readable by one or more processors. Instructions may be stored on the program storage devices for causing the one or more processors to perform any of the techniques disclosed herein.

Various programmable electronic devices are also disclosed herein, in accordance with the program storage device embodiments enumerated above. Such electronic devices may include one or more image capture devices, such as optical image sensors/camera units; a display; a user interface; one or more processors; and a memory coupled to the one or more processors. Instructions may be stored in the memory, the instructions causing the one or more processors to execute instructions in accordance with the various techniques disclosed herein.

### BRIEF DESCRIPTION OF THE DRAWINGS

Figures **1A** and **1B** illustrate exemplary images, saliency maps, and regions of interest (ROIs), according to one or more embodiments.
Figures **2A** and **2B** illustrate exemplary determined cropped regions, according to one or more embodiments.
Figure **3A** illustrates a graph of exemplary cropping scores, according to one or more embodiments.
Figure **3B** illustrates exemplary interpolation techniques for determining cropping scores, according to one or more embodiments.
Figure **4** is flow chart illustrating a method of performing automatic image cropping techniques, according to one or more embodiments.
Figure **5** is flow chart illustrating a method of performing automatic image cropping techniques, according to one or more embodiments.
Figure **6** is a block diagram illustrating a programmable electronic computing device, in which one or more of the techniques disclosed herein may be implemented.

### DETAILED DESCRIPTION

In the following description, for purposes of explanation, numerous specific details are set forth in order to provide a thorough understanding of the inventions disclosed herein. It will be apparent, however, to one skilled in the art that the inventions may be practiced without these specific details. In other instances, structure and devices are shown in block diagram form in order to avoid obscuring the inventions. References to numbers without subscripts or suffixes are understood to reference all instance of subscripts and suffixes corresponding to the referenced number. Moreover, the language used in this disclosure has been principally selected for readability and instructional purposes and may not have been selected to delineate or circumscribe the inventive subject matter, and, thus, resort to the claims may be necessary to determine such inventive subject matter. Reference in the specification to "one embodiment" or to "an embodiment" (or similar) means that a particular feature, structure, or characteristic described in connection with the embodiments is included in at least one embodiment of one of the inventions, and multiple references to "one embodiment" or "an embodiment" should not be understood as necessarily all referring to the same embodiment.

### Introduction and Problem Background

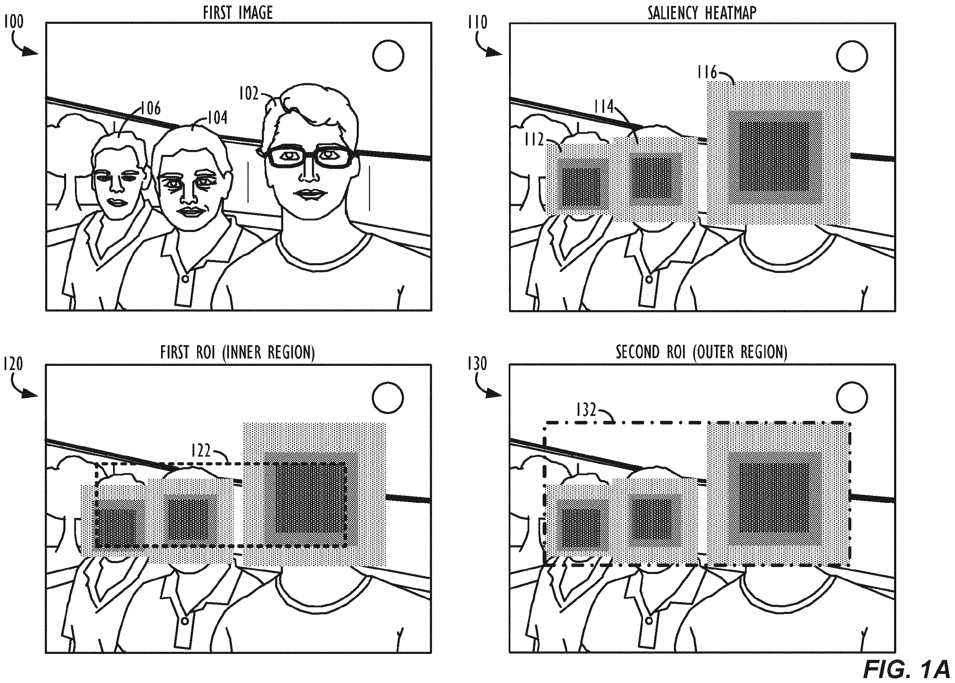

Turning now to Figure **1A****,** exemplary images, saliency maps, and regions of interest (ROIs) are illustrated, according to one or more embodiments. First image **100** will be used as a sample image to discuss the various techniques presented herein. As may be seen, image **100** is a rectangular, landscape-oriented image that includes various human subjects **102/104/106** positioned from left to right across the extent of the image. Image **100** also reflects an outdoor scene, wherein the background of the human subjects includes various objects, such as a wall, a tree, the moon, etc.

Assuming that a user wanted to use the first image **100** as a background image on the display of one of their electronic devices and thus provided target dimensions for a cropped region it wished to have determined from the first image **100,** a first determination could be made as to whether the aspect ratio of the target dimensions of the first image **100** matched the aspect ratio of the display of the target electronic device that the user is interested in using image **100** as a background image on. If the aspect ratio of the target dimensions of the image **100** and the aspect ratio of target device's display matched, then (assuming the image had sufficient resolution), the image **100** could simply used as a background image on the target device's display without further modification.

However, as is more commonly case, there will be a mismatch between the aspect ratio and/or target dimensions requested for a crop of a given image and those of the target display (or region of a display) that a user desires to use the image on. Moreover, many electronic device displays are capable of being used in multiple orientations (e.g., portrait and landscape), meaning that there are likely multiple different cropped regions that would need to be determined, even for a single image intended for a single display device. For example, using landscape image **100** unaltered as a background image on a device that is operated in portrait orientation (e.g., a smartphone), would not be visually-pleasing, as, e.g., the sky would appear on the right-hand side of the device display, and the three human subjects would appear to be emerging from the left-hand side of the device display and stacked vertically on top of one another. Instead, it would be desirable to automatically determine a visually-pleasing vertically-cropped region that would fit the device's display when in the portrait orientation, while still displaying the important parts of the image (and in the correct orientation).

As another example, a user may want to use image **100** as a background image on two (or more) different devices with different display properties, e.g., a smartphone with a portrait orientation 16:9 screen aspect ratio, a desktop monitor with a landscape orientation 16:9 screen aspect ratio, and a tablet device with both portrait and landscape possible orientations, each having a 4:3 screen aspect ratio. Thus, in total, the user may desire four different intelligent cropped regions to be automatically determined for image **100,** such that each determined cropped region had the correct target dimensions and aspect ratios-and included important content when used as a background image on its respective device (and in its respective orientation). (It is to be understood that all references to a desired use of image **100** as background image on a display device apply equally to a desired use of image **100** within a designated content area having a given aspect ratio and/or dimensions within an application UI.)

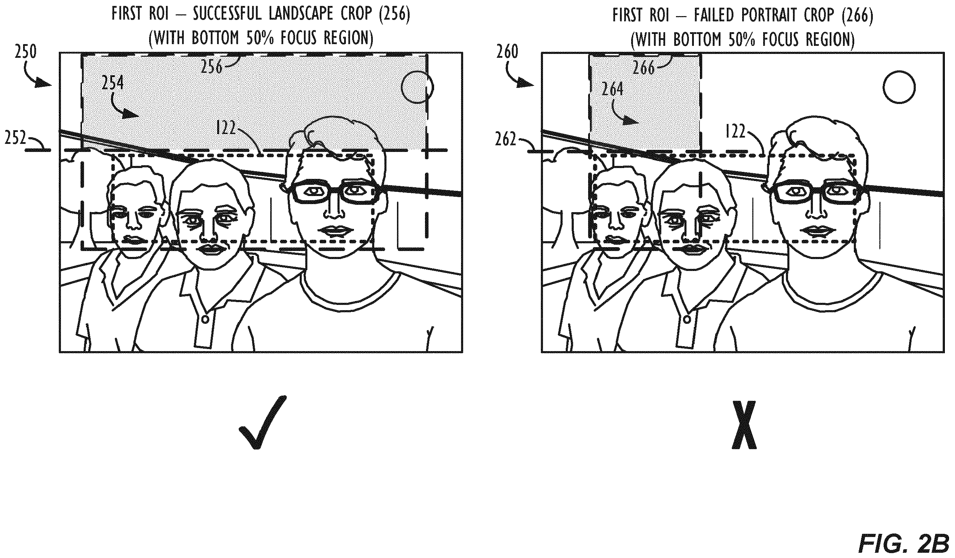

As mentioned above, one aspect of automatically determining an intelligent cropped region for a given image is to be able to understand which parts of the image contain the content that is likely to be important, relevant, or otherwise salient to the user. Once such a determination is made, it may be desirable to include as much of such important content as possible in the determined cropped region (while also optionally further aiming to keep as much of the important content as possible within a focus region within the determined cropped region, as will be described in greater detail below with respect to Figure **2B**).

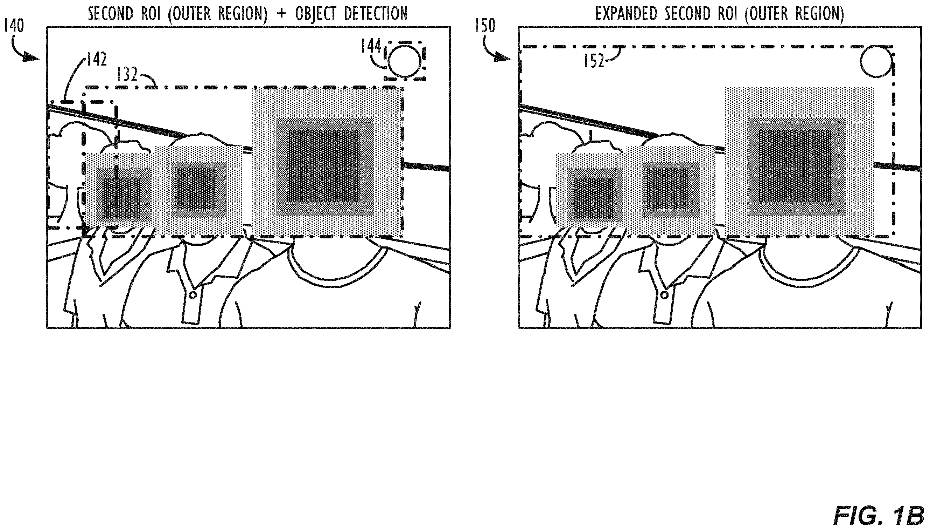

In some embodiments, a saliency heatmap, such as exemplary saliency heatmap **110** in Figure **1**, may be utilized to generate a bounding box(es) around salient objects (i.e., Saliency-O) and/or salient regions in an image where a user's attention is likely to be directed (i.e., Saliency-A) when looking at the image. For purposes of this description, a salient object or salient region refers to a portion of potential interest in an image, and a saliency value refers to a likelihood that a particular pixel belongs to a salient object or region within the image.

A saliency heat map may provide a binary determination for each pixel in an image (e.g., a value of 'o' for a non-salient pixel, and a value of '1' for a salient pixel). In other cases, as illustrated in exemplary saliency heatmap **110** in Figure **1**, there may be continuous saliency scores assigned to each pixel that cover a range of potential score values, e.g., from a score of 0% up to 100%. For example, the smallest dark squares centered over the faces of the human subjects in image **110** may represent regions of pixels having a saliency score of 60% or greater. The next larger square over each human subject's face, having slightly lighter coloration, may represent regions of pixels having a saliency score of 50% or greater. Finally, the outermost, largest square over each human subject's face, having the lightest coloration, may represent regions of pixels having a saliency score of 15% or greater. Regions in image **110** that are not covered by a box in this heatmap example may simply represent regions of pixels having a saliency score of lower than 15%, i.e., regions of the image that are not very likely to have interesting or important content in them that a user would find essential or important to be included in a determined cropped region to be used for a background image or in a designated content area on one of their devices. It is to be understood that the saliency heatmap may alternatively be generated on a downsampled image, such that each portion of pixels is given an estimated saliency value in the heatmap, if desired for a given implementation.

According to some embodiments, a saliency model used to generate the saliency heatmap **110** may include a trained saliency network, by which saliency of an object may be predicted for an image. In one or more embodiments, the saliency model may be trained with still image data or video data and may be trained to predict the salience of various objects in the image. The saliency model may be trained in a class-agnostic manner. That is, the type of object may be irrelevant in the saliency network, which may only be concerned with whether or not a particular object is salient. Further, the saliency network may be trained on RGB image data, and/or RGB+Depth image data. According to one or more embodiments, by incorporating depth into the training data, more accurate saliency heatmaps may possibly be generated. As an example, depth may be used to identify object boundaries, layout of the scene, and the like.

In one or more embodiments, the trained saliency network may take as input an image, such as image **100,** and output a saliency heatmap, such as saliency heatmap **110**, indicating a likelihood of whether a particular portion of the image that is associated with a salient object or region. Further, in one or more embodiments, the trained saliency network may additionally output one or more bounding boxes indicating a region of interest within the saliency heatmap. In one or more embodiments, such as those described in the commonly-assigned, co-pending U.S. Patent Application No. 16/848,315 (hereinafter, "the '315 application", which is hereby incorporated by reference in its entirety), the saliency model may incorporate, or feed into, a bounding box neural network, which may be used to predict the optimal dimensions and/or locations of the bounding box.

In other embodiments, such as those that will be illustrated herein, the bounding boxes may be determined using a simple thresholding operation. For example, as shown in image **120**, a first ROI **122** (which also may be referred to herein as an "inner region," "inner crop," or "tight crop") may be determined as the smallest rectangle that can encompass all portions of the image having greater than a first threshold saliency score (e.g., the 60% score associated with the darkest square regions in the saliency heatmap, as described above). Likewise, as shown in image **130**, a second ROI **132** (which also may be referred to herein as an "outer region," "outer crop," or "loose crop") may be determined as the smallest rectangle that can encompass all portions of the image having greater than a second threshold saliency score, wherein second threshold saliency score is lower than the first threshold saliency score (e.g., the 15% score associated with the lightest square regions in the saliency heatmap, as described above). As mentioned above, the first ROI may serve as a proxy for parts of the image considered 'essential' to be in the cropped image, and the second ROI may serve as a proxy for parts of the image considered 'preferable' to be in the cropped image, if possible. In some cases, a determined ROI itself may simply be used as the determined cropped region for a given image, e.g., assuming that it has target dimensions that meet an end user or application's requirements. It is to be understood that different threshold saliency scores may be used for each ROI in a given implementation, and that any desired number of ROIs may be identified in a given smart cropping scheme, which ROIs may be contiguous or non-contiguous within the image, and may be non-overlapping or at least partially overlapping.

Turning now to Figure **1B**, exemplary ROIs and expanded ROIs are illustrated, according to one or more embodiments. As shown in image **140**, one or more object detection classifiers or algorithms may have also been run on the image **100,** thereby identifying various objects, such as tree **142** and/or moon **144.** In some cases, e.g., depending on the type of object identified (or the identity of the person recognized, in the case of a facial recognition algorithm), the boundaries of an ROI, e.g., as determined by a saliency heatmap, may be expanded (or otherwise modified) to incorporate (or exclude) one or more of the identified objects. For example, as shown in image **150,** if it is determined that tree **142** and moon **144** are the types of objects that users generally find salient (and, thus, would like to have included in any determined cropped region to be used as a background image or within a designated content area), then the original rectangular region defining the second ROI **132**, discussed above with regard to Figure **1A**, might be expanded to include tree **142** and moon **144**, as shown in expanded ROI **152**. As may now be understood, the exact specification of how to define the boundaries of ROIs, how large to make them, and/or what objects to consider for inclusion (or exclusion) inside an ROI (as well as how many different levels or 'tiers' of ROIs to use on a given image) may all be customized, based on the needs of a given implementation.

### Exemplary Cropped Regions

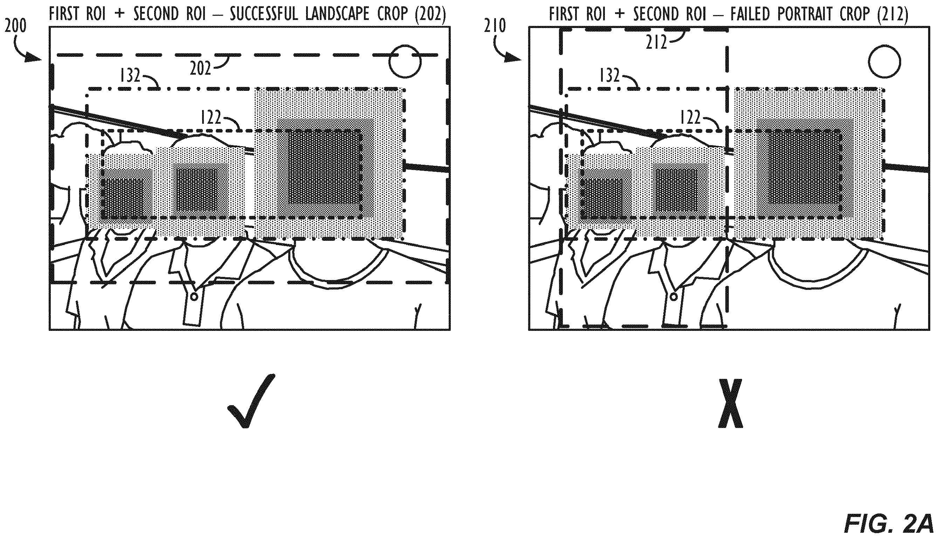

Turning now to Figure **2A**, exemplary determined cropped regions **202/212** are illustrated, according to one or more embodiments. Turning first to image **200** (which comprises the same content as image **100,** and which shows the same overlaid first ROI **122** and second ROI **132**, discussed above with regard to Figure **1A**), a landscape crop has been requested, e.g., by an end user or application, having particular target dimensions (and, by implication, aspect ratio). In some embodiments, it may be preferable to attempt to match at least one dimension of the determined cropped region (e.g., the width or the height) with the corresponding dimension of the first image. In the illustrated example, the method was able to match the width of the cropped region **202** with the width of the image **200.** (It is to be understood that, in some situations, it may not be possible to match one of the dimensions of the determined cropped region with the corresponding dimension of the first image, for various reasons, including the aspect ratio and/or resolution of the first image.)

Once the width of cropped region **202** has been determined, the height of the cropped region **202** may be determined, based on the particular aspect ratio of the target dimensions requested by the end user or application for the potential background image or designated content area crop. Having determined the dimensions of cropped region **202**, the method may next attempt to determine where within the original image **200** the cropped region should be located, in order to produce the most visually-pleasing background image or designated content area crop from the first image. In some embodiments, this may comprise setting at least one of: the first width, first height, and first location of the determined cropped region based, at least in part, on an effort to maximize an amount of overlap between the first cropped region and the first ROI. In other embodiments, efforts to determine the cropped region's size and location maybe configured to prioritize encompassing the entire first ROI and then, assuming the first ROI is entirely encompassed, further configured to attempt to also overlap with as much of the second ROI as is possible, given the constraints of the image, and the target dimensions requested for the cropped region. As shown in image **200**, a location for the cropped region **202** was able to be determined, given the requested target dimensions for the crop, that encompassed the entirety of both first ROI **122** and second ROI **132**. Thus, based on the way the first and second ROIs were specified using the saliency heatmap, it is likely the determined cropped region **202** will encompass all of the essential and preferred subject matter of the original first image.

Further considerations may also be made as to where to place determined cropped region **202** vertically within the extent of image **200.** For example, determined cropped region **202** could be placed at various positions vertically within the extent of image **200** and still encompass all of both first ROI **122** and second ROI **132**. Thus, an exact location for the cropped region must still be determined. According to some embodiments, it may be preferable to center the cropped region **202** with respect to one or more of the ROIs, as there may be an implicit assumption that the importance of a given ROI is rooted from the center of the ROI. For example, as illustrated in image **200**, the location of determined cropped region **202** has been centered, such that the top of cropped region **202** is midway between the top of second ROI **132** and the top border of image **200**, while the bottom of cropped region **202** is simultaneously midway between the bottom of second ROI **132** and the bottom border of image **200.** It is to be understood that different criteria may be used when determining a placement for the cropped region (e.g., in the event that the user has defined a "focus region" within the cropped region, as will be discussed in greater detail below with regard to Figure **2B**), and that centering the cropped region within the image with respect to the largest ROI is just one exemplary scheme that may be followed.

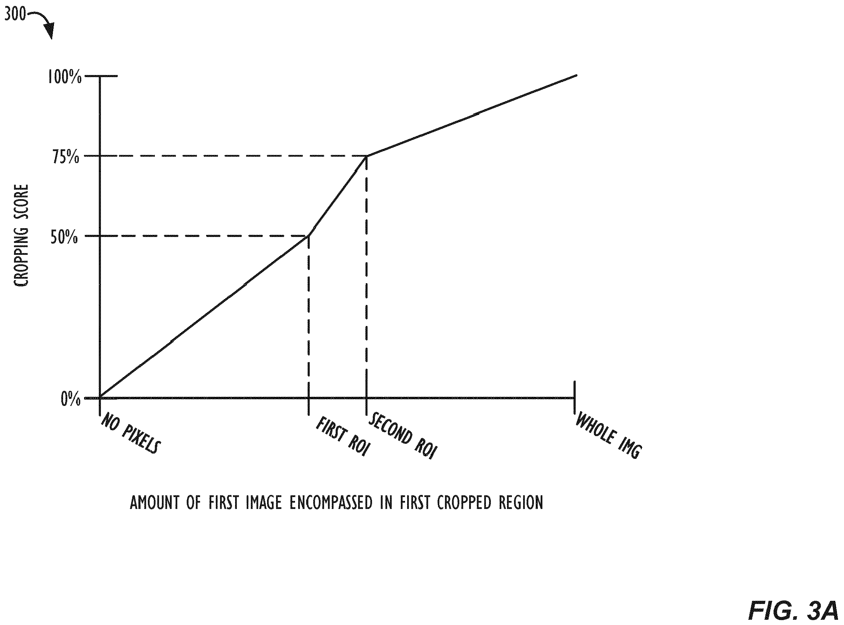

As will be explained in greater detail below with regard to Figure **3A**, according to some embodiments, a cropping score may be determined for each determined cropped region. The cropping score may comprise a score designed to quantify the likely quality of the cropped region for use on a particular device's display screen. In some cases, there may be a minimum score threshold defined that a determined cropped region must attain before the cropped region will be recommended to an end user or application for use as a background image or within a designated content area. For example, in one embodiment, a simple minimum score threshold may be set based on the score attained when a cropped region encompasses the entire first ROI (i.e., the parts of the image deemed most essential by the saliency network). In other words, in the example of Figure **2A**, a given determined crop may be rejected unless it encompasses at least the entire first ROI **122.** Because determined cropped region **202** does encompasses the entire first ROI **122,** it is shown with a checkmark underneath image **200**, indicating that a successful landscape cropped region **202** has been automatically and intelligently determined by the method. It is to be understood that other minimum score thresholds may also be employed, e.g., threshold scores based on the cropped region having to encompass all identified ROIs, having to encompass a certain percentage of total pixels in the image, having to have certain minimum dimensions, etc.

Turning now to image **210,** by contrast, an end user (or application) has requested a cropped region **212** having a similar aspect ratio as cropped region **202,** but with a different orientation, i.e., portrait orientation, rather than landscape orientation. Following the same process outlined above for image **200**, the method may attempt to match the height dimension of cropped region **212** with the height dimension of image **210,** and then seek the location within the extent of image **200** wherein the cropped region **212** could overlap the maximum amount of the first and/or second ROIs. As illustrated, no matter where cropped region **212** is located across the horizontal extent of image **210,** it will not be able to encompass the entirety of the first ROI **122** (let alone the entirety of the larger second ROI **132**). Thus, assuming the similar minimum score threshold were applied as described above with regard to image **200**, the determined cropped region **212** would be rejected (indicated by the 'X' mark beneath image **210**), because there is nowhere that it could be placed within the extent of image **200** that would encompass the entire first ROI **122.** It appears that the best placement for determined cropped region **212** may be as is illustrated in image **210,** i.e., encompassing the face of the two left-most human subjects in the image **104** and **106,** but not the human subject on the right-hand side of the image **102.** As described above, if the minimum score thresholds were relaxed in a given implementation (e.g., a requirement that only 50% of the first ROI **122** would need to be encompassed in the determined cropped region), then it may be possible that determined crop **212** would be deemed successful or acceptable.

According to other embodiments, e.g., as described above with reference to Figure **1B**, the dimensions and/or extent of the determined ROIs may be modified (e.g., expanded or contracted) based on one or more classifiers or object detection systems. For example, if a face recognition system were employed in conjunction with the saliency network, any unrecognized faces in an image might be excluded from an ROI, even if their saliency scores would otherwise lead them to be included in the ROI. Thus, in such an example, if the two human subjects on the left-hand side of the image **104** and **106** were recognized to the user's device (e.g., via a stored database of face models of individuals known to the user), while the human subject on the right-hand side of the image **102** was not recognized, then the human subject on the right-hand side of the image **102** may be excluded from the ROIs, which might reduce down the sizes of the ROIs **122/132,** such that the determined cropped region **212** may be able to make a successful or acceptable portrait orientation crop of image **210** (i.e., a crop that encompassed the entirety of the reduced-size ROIs **122/132** that excluded the human subject on the right-hand side of the image). In other cases, other heuristics could also be employed such, as modifying the cropping region based on the most visually prominent person, e.g., the person having the largest face in the image (as opposed to the most important person or most closely-related recognized person, etc.).

Turning now to Figure **2B**, exemplary cropped regions with focus regions are illustrated, according to one or more embodiments. As alluded to above, focus regions may comprise a further specification of a portion(s) of the determined cropped region (e.g., the bottom 75% of the cropped region, the bottom 50% of the cropped region, etc.), wherein the cropping score for the determined region is further determined based, at least in part, on an amount of the first and/or second ROI that is enclosed by the first focus region. In other words, if parts of the first and/or second ROI that are included in the determined cropped region extend beyond the specified focus region, it may negatively impact the cropping score of the determined cropped region.

Image **250** in Figure **2B** illustrates a successful landscape cropped region **256** that employs a bottom 50% focus region based on the first ROI, i.e., it is desired that the first ROI **122** does not extend beyond the bottom 50% of the determined cropped region **256.** Compared with cropped region **202** shown in Figure **2A**, the width dimension of cropped region **256** has been reduced somewhat from the entire extent of image **250**, in order to determine a cropped region **256,** wherein the first ROI **122** (i.e., containing largely the faces of the three human subjects in the image) is contained entirely in the bottom 50% of the determined cropped region **256,** as demarcated by horizontal line **252.** The shaded region **254** above horizontal line **252**, i.e., the upper 50% of the determined cropped region **256** may now safely be reserved for overlaid text, titles, clocks, battery indicators, or other display elements that may be present on the display screen of the device during the normal operation, without obscuring the essential subject matter of the image appearing in the cropped region (i.e., the contents of the image inside first ROI **122**).

By contrast, image **260** in Figure **2B** illustrates a failed portrait cropped region **266** that employs the same bottom 50% focus region constraint based on the first ROI, i.e., it is desired that the first ROI **122** does not extend beyond the bottom 50% of the determined cropped region **266.** As may be seen, in order to ensure that the contents of first ROI **122** only appear in the bottom 50% of the determined cropped region **266** and do not appear within the shaded region **264** (as demarcated by horizontal line **262**), the dimensions of determined cropped region **266** had to become quite small. In fact, determined cropped region **266** is so small that it again fails to meet the exemplary minimum score threshold based on encompassing the entirety of the first ROI**122.** As such, as with image **210** of Figure **2A**, the attempted portrait crop of image **250** with a bottom 50% focus region fails.

Some implementations may also place minimum resolution requirements on the determined cropped regions in order for them to be deemed successful as well. For example, if a determined cropped region had to be sized to a 600 pixel by 400 pixel region over the first image in order to meet the various ROI and/or focus region cropping criteria in place in a given crop request, the method may not suggest or recommend the determined crop to a device display screen or designated content area having a resolution greater than a predetermined multiple of one or more of the dimensions of the determined crop. For example, if the device display screen (or designated content area) that the crop was requested for had target dimensions of 1200 pixels by 800 pixels (or larger), i.e., a 3:2 aspect ratio landscape rectangular cropped region, then the determined cropped region of size 600 pixels by 400 pixels may simply be deemed too small for use as a background image (or within a designated content area), even if it otherwise met all other cropping criteria, as upscaling a cropped region too much to fit on a device's display as a background image (or within a designated content area) may also lead to visually unpleasing results, i.e., even if the important content from the image is included in the crop, it may be too blurry or jagged from the upscaling to work well as a background image (or within a designated content area). As may now be understood, the requested target dimensions, aspect ratio, orientation, image resolution, and minimum score threshold-as well as the actual size and location of the salient content in the image-may all have a large impact on whether or not a determined cropped region for a given image may be deemed successful and/or worthy of recommendation for use to a requesting end user or application.

### Cropping Scores

As alluded to above, cropping scores may be determined for each cropped region according to any number of desired criteria, e.g., whether or not an identified ROI is encompassed by the cropped region, the relative importance of an ROI (e.g., based on the types of objects or people present), a total number of image pixels encompassed by the cropped region, a percentage of total image pixels encompassed by the cropped region, the dimensions of the cropped region, the familiarity a user may have with the location where the image was taken, etc.

Turning now to Figure **3A**, a graph **300** of exemplary cropping scores is illustrated, according to one or more embodiments. In the example of Figure **3A**, the cropping score for a determined cropped region is based, at least in part, on whether (and to what extent) the defined first ROI and/or second ROI are encompassed by the determined cropped region. As shown at the left-hand side of the horizontal axis of graph **300,** if no pixels from the image are encompassed in the determined cropped region, that would equate to a cropping score of 0% on the vertical axis of graph **300.** At the other extreme, as shown at the right-hand side of the horizontal axis of graph **300,** if all of the pixels from the image are encompassed in the determined cropped region, that would equate to a perfect cropping score of 100% on the vertical axis of graph **300.** In between these endpoints on the horizontal axis, various threshold scores may be specified. For example, as illustrated in graph **300,** if the determined cropped region encompasses all of the first ROI (i.e., the inner region or tighter crop, containing all the deemed 'essential' parts of the image), the cropped region will be assigned a first minimum score, e.g., 50%. Moving to the right along the horizontal axis, if the determined cropped region encompasses all of the second ROI (i.e., the outer region or looser crop, containing all the deemed 'essential' and the deemed 'preferred' parts of the image), the cropped region will be assigned a second minimum score, e.g., 75%, that is greater than the first minimum score.

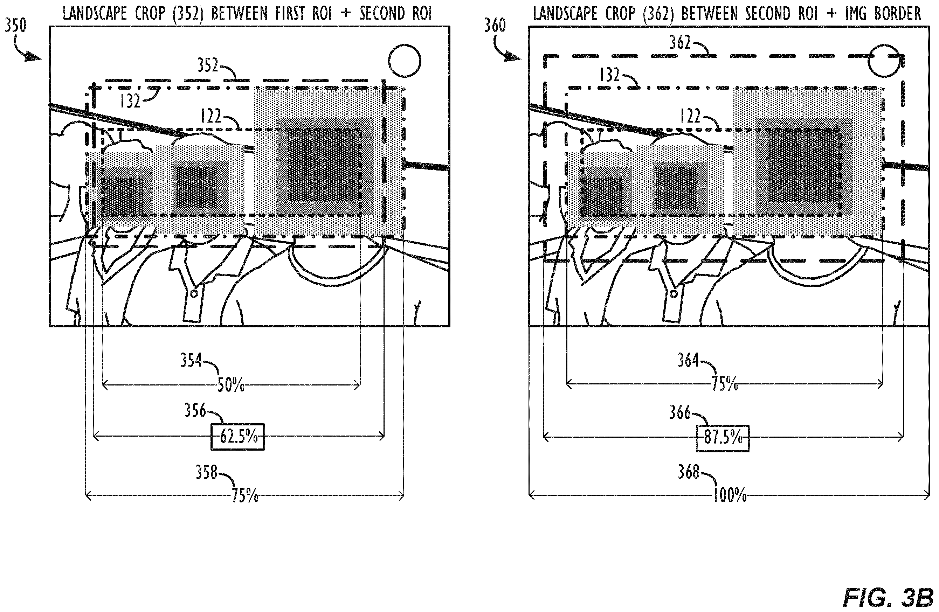

If the amount of ROI encompassed by the determined cropped region is somewhere between the extents of the first ROI and the second ROI, then the cropping score may be determined by applying an interpolation, e.g., a linear interpolation, between the first minimum score (e.g., 50%) and the second minimum score (e.g., 75%), as will be shown in greater detail with regard to Figure **3B****.** Likewise, if the amount of ROI encompassed by the determined cropped region is somewhere between no pixels and the extent of the first ROI, then the cropping score may be determined by applying an interpolation, e.g., a linear interpolation, between 0% and the first minimum score (e.g., 50%). (As discussed above, in some implementations, encompassing less than the first ROI may not result in a cropping score that would exceed the minimum score threshold. As such, the interpolation step may be avoided, and the determined cropped region may simply be rejected, as not encompassing enough of the essential parts of the image.) Similarly, if the amount of ROI encompassed by the determined cropped region is somewhere between the extent of the second ROI and the full extent of the image, then the cropping score may be determined by applying an interpolation, e.g., a linear interpolation, between the second minimum score (e.g., 75%) and a score of 100%. It is to be understood that other functions (e.g., non-linear functions), look-up tables (LUTs), thresholds, rules, etc. may be used to map from the values indicative of the amounts of the first image encompassed by the determined cropped region to a cropping score, as desired by a given implementation.

Turning now to Figure **3B**, exemplary interpolation techniques **350/360** for determining cropping scores are illustrated, according to one or more embodiments. As discussed above with regard to Figure **3A**, according to some embodiments, the cropping score for a given determined cropped region may be determined via one or more interpolation processes. For example, looking at image **350,** the determined cropped region **352** encompasses the entirety of the vertical extent of first ROI **122** and second ROI **132**, but is positioned about halfway between the horizontal extent of first ROI **122** and second ROI **132**. As illustrated below image **350**, applying the cropping scoring scheme detailed above in graph **300** of Figure **3A**, if the cropped region **352** encompassed only the entirety of the first ROI **122,** it would be assigned a cropping score of 50% (**354**). Likewise, if the cropped region **352** encompassed only the entirety of the second ROI **132**, it would be assigned a cropping score of 75% **(358).**

However, as illustrated, the cropped region **352** extends half of the way between the left-hand side of the first ROI **122** and the left-hand side of the second ROI **132**. Likewise, because it has been centered horizontally over the ROIs, the cropped region **352** extends half of the way between the right-hand side of the first ROI **122** and the right-hand side of the second ROI **132**. As such, performing a linear interpolation between the first minimum cropping score of 50% (**354**) and the second minimum cropping score of 75% (**358**), the determined cropped region **352** maybe assigned a cropping score that is half of the way between the first minimum cropping score of 50% (**354**) and the second minimum cropping score of 75% (**358**), i.e., a score of 62.5% **(356).**

Turning now to image **360,** the determined cropped region **362** again encompasses the entirety of the vertical extent of first ROI **122** and second ROI **132**, as well as the horizontal extent of first ROI **122,** but is positioned about halfway between the horizontal extent of second ROI **132** and the outer extent of image **360.** As illustrated below image **360,** applying the cropping scoring scheme detailed above in graph **300** of Figure **3A**, if the cropped region **362** encompassed the entirety of the second ROI **132**, it would be assigned a cropping score of 75% (**364**). Likewise, if the cropped region **362** encompassed the entirety of the image **360,** it would be assigned a cropping score of 100% (**368**).

However, as illustrated, the cropped region **362** extends half of the way between the left-hand side of the second ROI **132** and the left-hand side of the image **360.** Likewise, because it has been centered horizontally over the ROIs, the cropped region **362** extends half of the way between the right-hand side of the second ROI **132** and the right-hand side of the image **360.** As such, performing a linear interpolation between the second minimum cropping score of 75% (**364**) and the maximum cropping score of 100% (**368**), the determined cropped region **362** may be assigned a cropping score that is half of the way between the second minimum cropping score of 75% (**364**) and the maximum cropping score of 100% (**368**), i.e., a score of 87.5% (**366**).

As illustrated in Figure **3B****,** the determined cropping scores apply only to the horizontal extent of the determined cropped regions. It is to be understood that analogous cropping scores could also be determined for the vertical extents of each determined cropped region. Therefore, while a given image could have a cropping score of 100% in one dimension, the other dimension may not have a 100% score (e.g., unless the desired aspect ratio for the crop matched the image exactly). In some implementations, then, the final cropping score for an image may be the smaller of the cropping scores calculated for the vertical and horizontal extents of the image. In other implementations, the larger of the vertical and horizontal cropping scores, an average of the vertical and horizontal cropping scores, or some other combination may be used to determine the final cropping score for the image.

As may be understood, the cropping score scheme detailed above in reference to Figures **3A** and **3B** is just one possible such scheme, and other methods may be employed to determine and/or use the cropping score for a given cropped region, as desired by a given implementation.

For example, in some cropping score schemes, the content within an image can be given individual rankings and/or weighting factors (e.g., broken down by pixel, by ranked region, by object, etc.), and then the cropped region may be determined in an attempt to maximize the score of the pixels within the cropped region (e.g., by summing together all the determined scores of the pixels, regions, etc., that are encompassed by the cropped region). In such schemes, the final cropping score of a determined cropped region may, e.g., be calculated as a sum of: the percentages of each ranked region that is encompassed in the determined crop multiplied by the region's respective weighting factor. For example, if "food" objects in a given image were given a top ranking and a weighting factor of 100, while "human" objects in the given image were given a secondary ranking and a weighting factor of 25, then a determined crop region that included all of the humans in the image but only half of the food objects would receive a score of: 75 (i.e., 25 ^{∗} 1.0 + 100 ^{∗} 0.5), whereas a determined crop region that included none of the humans in the image but all of the food objects would receive a score of: 100 (i.e., 25 ^{∗} 0.0 + 100 ^{∗} 1.0), and thus be the higher-scoring cropped region, based on the assigned scoring scheme in this example that was biased towards food-based content in images-even though it left out all of the human subjects from the cropped region.

Based on the above example, it may be understood that the examples described hereinabove having two ROIs (i.e., an inner region and an outer region) are merely illustrative, and many more than two ROIs may be identified, e.g., using any number of weighted scoring thresholds (e.g., a first ROI comprising cropped regions that would have a score of 100 or greater, a second ROI comprising cropped regions that would have a score of 75 or greater, a third ROI comprising cropped regions that would have a score of 50 or greater, and so forth), and that such ROIs maybe overlapping, at least partially overlapping, or not overlapping at all within the image, depending on the weighting scheme assigned and the layout of objects in the scene. Furthermore, the ROIs within a given image may change over time, e.g., if a given scheme gave regions of the image including faces of recognized persons in an image a weighting factor of 200, then a region of an image containing an unknown "Person A" may not be part of the first ROI (i.e., most essential region) when the image is first captured, but if "Person A" is recognized and added to a user's database of recognized persons at a later time, then when the cropping score for the image is determined again at the later time, it is possible that the region of the image containing the now-known "Person A" would be part of the first ROI, as it would now be scored much higher, owing to its now inclusion of a recognized person.

In some embodiments, multiple candidate regions may be identified to serve as the first ROI and/or second ROI, e.g., if the regions of 'essential' and/or 'preferred' content within an image happened to be discontinuous (e.g., in the case of a highly salient region of content at the left edge of an image and other equally-highly salient content at the right edge of the image, with less salient content in the central portion of the image). In such scenarios, the final cropping score may actually be deemed the best score, the worst score, or the mean score across all the candidate choices of first and second ROIs. In other words, if the scoring scheme can accept a ranked and weighted list of ROIs, then, in addition to the final cropping score, the scoring scheme may also provide information about how much of each candidate ROI is captured by the final cropped region.

In some embodiments, cropping scores for given images may potentially be used, in real-time, to determine which type of cropped region (and/or how many cropped regions) will be rendered and incorporated into a designated content area of a device's UI for each given image. For example, an application rendering graphical information to a device's UI may be faced with a decision as to whether it should display a single rectangular crop of an image within a designated content area of the application's UI or two square crops of two different images that occupy the same space total space of the designated content area as the single rectangular photo. If a square aspect ratio cropping score for the two images in this example are relatively close (e.g., within some predetermined relative cropping score similarity threshold), then one option could be to display both images as side-by-side squares in the designated content area of the application or device's UI. By contrast, if a rectangular aspect ratio cropping score is significantly higher (e.g., greater than some predetermined relative cropping score difference threshold) for one image when cropped as a single rectangular image, then it might be a better choice to display the one image as a single rectangular photo in the designated content area of the application or device's UI. Note that the display and application properties, such as those mentioned above (e.g., size, orientation, aspect ratio, resolution, etc.) can also play a role with this decision of how many images (and which crops of such images) to display in a designated content area in a given situation. If the single rectangular image were to be displayed on a high resolution TV screen, e.g., then the decision may be to display two square images within the designated content area, because a single image may not have a high enough resolution to be used as a single image on the TV. However, it might be determined that the same content (i.e., the same two images from the example above) should be displayed as a single image on the phone, as the resolution of a first one of the two images could be of sufficient quality in the context of the designated content area on the relatively smaller display screen of the phone. It is also noted that the smart cropping techniques discussed herein can enable an image storage/management system to store only single source version of each piece of multimedia content, and make 'on-the-fly,' i.e., real-time or near real-time, choices about how to crop, layout, and display such content, e.g., depending on the particular display device, orientation, resolution, screen space available, designated content area, etc.

In still other embodiments, cropping scores may be used by devices and/or applications to make intelligent decisions about which potential crops to use in a given situation, e.g., based on the designated content area available to be displayed into in a given situation. For example, if there is a sufficiently large designated content area into which a device or application wishes to display content, it may be desirable to have a higher cropping score quality threshold for the content selected to appear there. By contrast, for a smaller designated content area, a lower cropping score quality threshold could potentially be used, since it is more likely that such content would be accompanied by other content of equal or greater cropping score on the display UI at the same time.

In yet other embodiments, other auxiliary information, e.g., the familiarity a user may have with the location where the image was taken, may be used in the determination and scoring of the cropped regions. For example, if an image is of a scenic vacation location (e.g., a place that the user does not visit often or does not have a large number of images of), the cropping score may further be penalized for determining cropped regions that crop out large portions of the original image, whereas, if the image is from a scenic place in the user's neighborhood (e.g., a place that the user does visit often or already has a large number of other images of in their multimedia library), the cropping score may assign less of a penalty for determining cropped regions that crop out larger portions of the original image, since the user would likely already be familiar with the location being displayed in the image.

### Exemplary Smart Image Cropping Operations

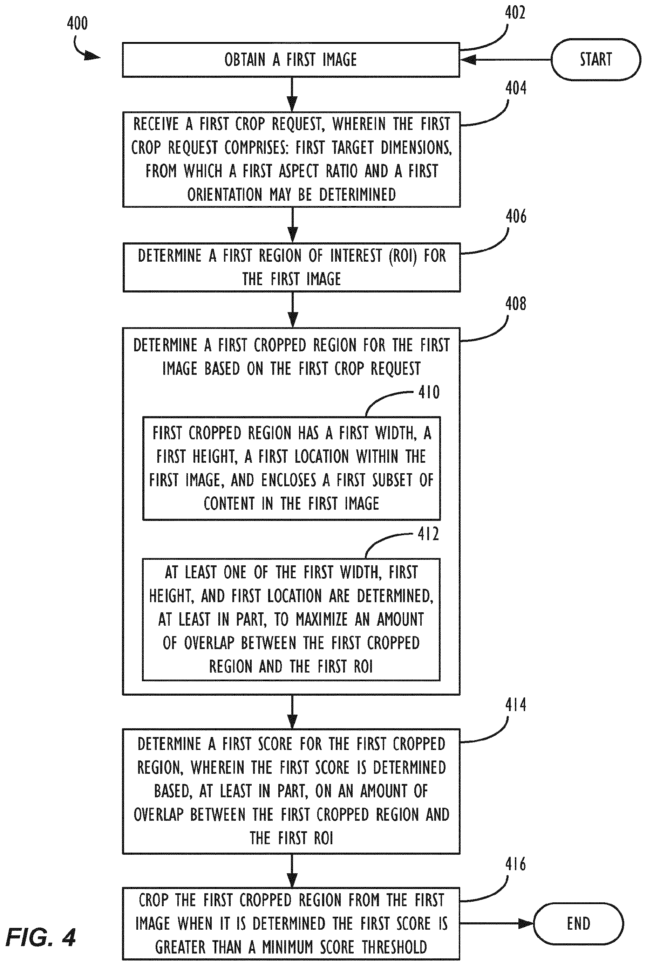

Referring now to Figure **4**, a flow chart illustrating a method **400** of a method of performing automatic image cropping is shown, in accordance with one or more embodiments. First, at Step **402**, the method **400** may obtain a first image. Next, at Step **404**, the method **400** may receive a first crop request, wherein the first crop request comprises: first target dimensions, from which a first aspect ratio and a first orientation may be determined. Allowing for the specification of target dimensions (as opposed to an explicit aspect ratio and orientation) would allow for the deduction of aspect ratio and orientation. Further, it also would also enable the minimum resolution cropping constraint scenarios discussed earlier. Next, at Step **406,** the method **400** may determine a first region of interest (ROI) for the first image, e.g., using any of the aforementioned saliency- or object detection-based techniques.

Next, at Step **408,** the method **400** may determine a first cropped region for the first image based on the first crop request, e.g., wherein the first cropped region has a first width, a first height, a first location within the first image, and encloses a first subset of content in the first image (Step **410**), and wherein at least one of the first width, first height, and first location are determined, at least in part, to maximize an amount of overlap between the first cropped region and the first ROI (Step **412**).

Next, at Step **414,** the method **400** may determine a first score for the first cropped region, wherein the first score is determined based, at least in part, on an amount of overlap between the first cropped region and the first ROI. Finally, at Step **416,** the method **400** may crop the first cropped region from the first image when it is determined the first score is greater than a minimum score threshold.

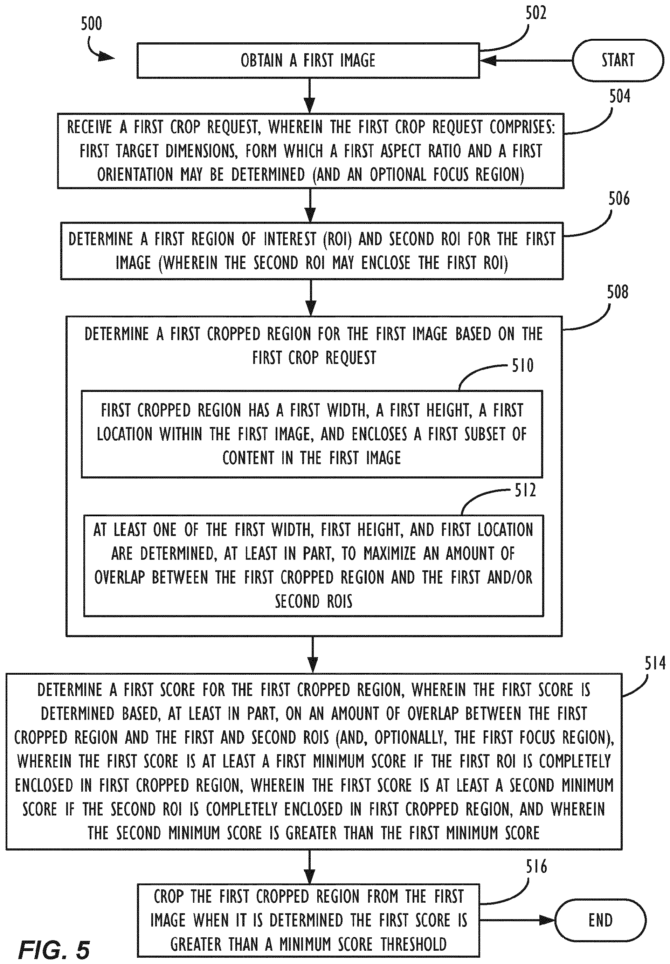

Referring now to Figure **5**, a flow chart illustrating a method **500** of another method of performing automatic image cropping is shown, in accordance with one or more embodiments. Method **500** is similar to that of method **400**, however, method **500** details a scenario wherein there are multiple ROIs defined over the first image, as well as the optional specification of a focus region within the determined cropped region.

First, at Step **502**, the method **500** may obtain a first image. Next, at Step **504**, the method **500** may receive a first crop request, wherein the first crop request comprises: first target dimensions, from which a first aspect ratio and a first orientation may be determined, and, optionally, the specification of a focus region. Next, at Step **506**, the method **500** may determine a first region of interest (ROI) and second ROI for the first image, e.g., wherein the second ROI may optionally be a superset of (i.e., entirely enclose) the first ROI.

Next, at Step **508**, the method **500** may determine a first cropped region for the first image based on the first crop request, e.g., wherein the first cropped region has a first width, a first height, a first location within the first image, and encloses a first subset of content in the first image (Step **510**), and wherein at least one of the first width, first height, and first location are determined, at least in part, to maximize an amount of overlap between the first cropped region and the first and/or second ROIs (Step **512**). For example, as described above, some smart cropping schemes may prioritize overlapping the entire first ROI, and then seek to additionally overlap with as much of the second ROI as is possible, given the constraints of the image size and the target dimensions of the first crop request.

Next, at Step **514**, the method **500** may determine a first score for the first cropped region, wherein the first score is determined based, at least in part, on an amount of overlap between the first cropped region and the first and second ROIs (and, optionally, the amounts of the first and second ROI that were able to be contained in the first focus region), wherein the first score is at least a first minimum score if the first ROI is completely enclosed in first cropped region (and, optionally, within the first focus region of the first cropped region, as well), wherein the first score is at least a second minimum score if the second ROI is completely enclosed in first cropped region (and, optionally, within the first focus region of the first cropped region, as well), and wherein the second minimum score is greater than the first minimum score.

Finally, at Step **516,** the method **500** may crop the first cropped region from the first image when it is determined the first score is greater than a minimum score threshold.

### Exemplary Electronic Computing Devices

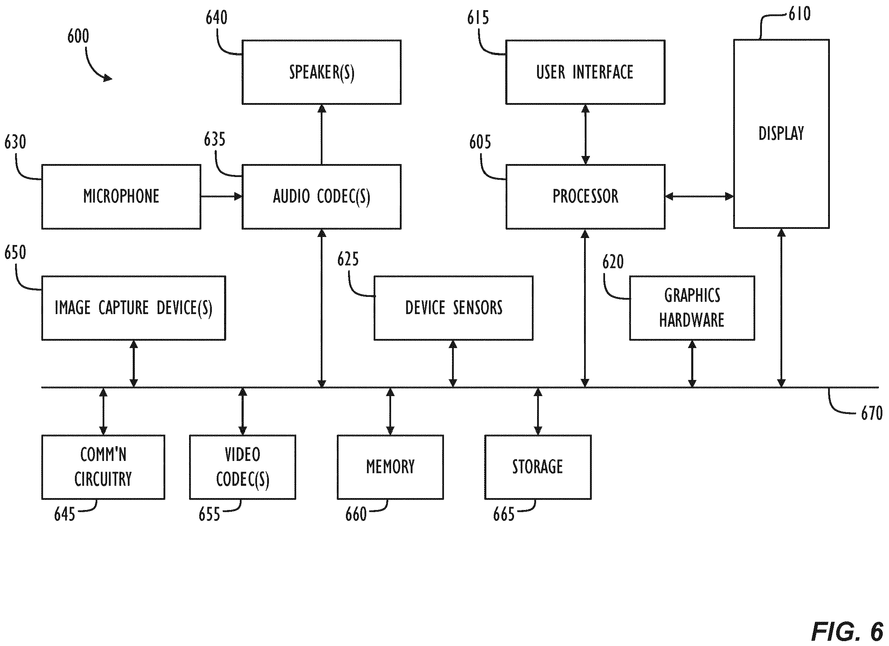

Referring now to Figure **6****,** a simplified functional block diagram of illustrative programmable electronic computing device **600** is shown according to one embodiment. Electronic device **600** could be, for example, a mobile telephone, personal media device, portable camera, or a tablet, notebook or desktop computer system. As shown, electronic device **600** may include processor **605**, display **610,** user interface **615**, graphics hardware **620,** device sensors **625** (e.g., proximity sensor/ambient light sensor, accelerometer, inertial measurement unit, and/or gyroscope), microphone **630**, audio codec(s) **635**, speaker(s) **640**, communications circuitry **645**, image capture device **650**, which may, e.g., comprise multiple camera units/optical image sensors having different characteristics or abilities (e.g., Still Image Stabilization (SIS), high dynamic range (HDR), optical image stabilization (OIS) systems, optical zoom, digital zoom, etc.), video codec(s) **655**, memory **660,** storage **665**, and communications bus **670.**

Processor **605** may execute instructions necessary to carry out or control the operation of many functions performed by electronic device **600** (e.g., such as the generation and/or processing of images in accordance with the various embodiments described herein). Processor **605** may, for instance, drive display **610** and receive user input from user interface **615.** User interface **615** can take a variety of forms, such as a button, keypad, dial, a click wheel, keyboard, display screen and/or a touch screen. User interface **615** could, for example, be the conduit through which a user may view a captured video stream and/or indicate particular image frame(s) that the user would like to capture (e.g., by clicking on a physical or virtual button at the moment the desired image frame is being displayed on the device's display screen). In one embodiment, display **610** may display a video stream as it is captured while processor **605** and/or graphics hardware **620** and/or image capture circuitry contemporaneously generate and store the video stream in memory **660** and/or storage **665.** Processor **605** may be a system-on-chip (SOC) such as those found in mobile devices and include one or more dedicated graphics processing units (GPUs). Processor **605** may be based on reduced instruction-set computer (RISC) or complex instruction-set computer (CISC) architectures or any other suitable architecture and may include one or more processing cores. Graphics hardware **620** may be special purpose computational hardware for processing graphics and/or assisting processor **605** perform computational tasks. In one embodiment, graphics hardware **620** may include one or more programmable graphics processing units (GPUs) and/or one or more specialized SOCs, e.g., an SOC specially designed to implement neural network and machine learning operations (e.g., convolutions) in a more energy-efficient manner than either the main device central processing unit (CPU) or a typical GPU, such as Apple's Neural Engine processing cores.

Image capture device **650** may comprise one or more camera units configured to capture images, e.g., images which may be processed to generate intelligently-cropped versions of said captured images, e.g., in accordance with this disclosure. In some cases, the smart cropping techniques described herein may be integrated into the image capture device **650** itself, such that the camera unit may be able to convey high quality framing choices for potential images to a user, even before they are taken. Output from image capture device **650** may be processed, at least in part, by video codec(s) **655** and/or processor **605** and/or graphics hardware **620,** and/or a dedicated image processing unit or image signal processor incorporated within image capture device **650.** Images so captured may be stored in memory **660** and/or storage **665.** Memory **660** may include one or more different types of media used by processor **605**, graphics hardware **620,** and image capture device **650** to perform device functions. For example, memory 660 may include memory cache, read-only memory (ROM), and/or random access memory (RAM). Storage **665** may store media (e.g., audio, image and video files), computer program instructions or software, preference information, device profile information, and any other suitable data. Storage **665** may include one more non-transitory storage mediums including, for example, magnetic disks (fixed, floppy, and removable) and tape, optical media such as CD-ROMs and digital video disks (DVDs), and semiconductor memory devices such as Electrically Programmable Read-Only Memory (EPROM), and Electrically Erasable Programmable Read-Only Memory (EEPROM). Memory **660** and storage **665** may be used to retain computer program instructions or code organized into one or more modules and written in any desired computer programming language. When executed by, for example, processor **605**, such computer program code may implement one or more of the methods or processes described herein.

It is to be understood that the above description is intended to be illustrative, and not restrictive. For example, the above-described embodiments may be used in combination with each other. Many other embodiments will be apparent to those of skill in the art upon reviewing the above description. The scope of the invention therefore should be determined with reference to the appended claims, along with the full scope of equivalents to which such claims are entitled.

## Claims

1. A device, comprising:
a memory;
a display;
a user interface; and
one or more processors operatively coupled to the memory, wherein the one or more processors are configured to execute instructions causing the one or more processors to:
obtain a first image;
receive a first crop request, wherein the first crop request comprises: first target dimensions, from which a first aspect ratio and a first orientation may be determined;
determine a first region of interest (ROI) for the first image;
determine a first cropped region for the first image based on the first crop request, wherein the first cropped region has a first width, a first height, and a first location within the first image, wherein the first cropped region encloses a first subset of content in the first image, and wherein at least one of the first width, first height, and first location are determined, at least in part, to maximize an amount of overlap between the first cropped region and the first ROI;
determine a first score for the first cropped region, wherein the first score is determined based, at least in part, on an amount of overlap between the first cropped region and the first ROI; and
crop the first cropped region from the first image when it is determined the first score is greater than a minimum score threshold.

2. The device of claim 1, wherein the instructions further cause the one or more processors to:
receive a second crop request, wherein the second crop request comprises: second target dimensions, from which the first aspect ratio and a second orientation may be determined;
determine a second cropped region for the first image based on the second crop request, wherein the second cropped region has a second width, a second height, and a second location within the first image, wherein the second cropped region encloses a second subset of content in the first image, and wherein at least one of the second width, second height, and second location are determined to maximize an amount of overlap between the second cropped region and the first ROI;
determine a second score for the second cropped region, wherein the second score is determined based, at least in part, on an amount of overlap between the second cropped region and the first ROI; and
crop the second cropped region from the first image when it is determined the second score is greater than the minimum score threshold.

3. The device of claim 1, wherein the instructions further cause the one or more processors to:
determine a second ROI for the first image,
wherein at least one of the first width, first height, and first location are further determined to maximize an amount of overlap between the first cropped region and the second ROI, and
wherein the first score is further determined based, at least in part, on an amount of overlap between the first cropped region and the second ROI.

4. The device of claim 3, wherein the first score is further determined based, at least in part, on a relative distance of a boundary of the first cropped region between a corresponding boundary of the first ROI and the second ROI.

5. The device of claim 3, wherein the first ROI is determined to encompass all portions of image having a greater than a first threshold saliency score, wherein the second ROI is determined to encompass all portions of image having greater than a second threshold saliency score, and wherein second threshold saliency score is lower than the first threshold saliency score.

6. The device of claim 3, wherein the first score is at least a first minimum score if the first ROI is completely enclosed in first cropped region, wherein the first score is at least a second minimum score if the second ROI is completely enclosed in first cropped region, and wherein the second minimum score is greater than the first minimum score.

7. The device of claim 1, wherein the first crop request further specifies a first focus region, wherein the first focus region comprises a specified portion of the determined first cropped region, and wherein the first score is further determined based, at least in part, on an amount of the first ROI that is enclosed by the first focus region.

8. A non-transitory computer readable medium comprising computer readable instructions executable by one or more processors to:
obtain a first image;
receive a first crop request, wherein the first crop request comprises: first target dimensions, from which a first aspect ratio and a first orientation may be determined;
determining a first region of interest (ROI) for the first image;
determining a first cropped region for the first image based on the first crop request, wherein the first cropped region has a first width, a first height, and a first location within the first image, wherein the first cropped region encloses a first subset of content in the first image, and wherein at least one of the first width, first height, and first location are determined, at least in part, to maximize an amount of overlap between the first cropped region and the first ROI;
determining a first score for the first cropped region, wherein the first score is determined based, at least in part, on an amount of overlap between the first cropped region and the first ROI; and
cropping the first cropped region from the first image when it is determined the first score is greater than a minimum score threshold.

9. The non-transitory computer readable medium of claim 8, wherein the instructions further cause the one or more processors to:
receive a second crop request, wherein the second crop request comprises: second target dimensions, from which the first aspect ratio and a second orientation may be determined;
determine a second cropped region for the first image based on the second crop request, wherein the second cropped region has a second width, a second height, and a second location within the first image, wherein the second cropped region encloses a second subset of content in the first image, and wherein at least one of the second width, second height, and second location are determined to maximize an amount of overlap between the second cropped region and the first ROI;
determine a second score for the second cropped region, wherein the second score is determined based, at least in part, on an amount of overlap between the second cropped region and the first ROI; and
crop the second cropped region from the first image when it is determined the second score is greater than the minimum score threshold.

10. The non-transitory computer readable medium of claim 8, wherein the instructions further cause the one or more processors to:
determine a second ROI for the first image,,
wherein at least one of the first width, first height, and first location are further determined to maximize an amount of overlap between the first cropped region and the second ROI, and
wherein the first score is further determined based, at least in part, on an amount of overlap between the first cropped region and the second ROI.

11. The non-transitory computer readable medium of claim 10, wherein the first score is further determined based, at least in part, on a relative distance of a boundary of the first cropped region between a corresponding boundary of the first ROI and the second ROI.

12. The non-transitory computer readable medium of claim 10, wherein the first ROI is determined to encompass all portions of image having a greater than a first threshold saliency score, wherein the second ROI is determined to encompass all portions of image having greater than a second threshold saliency score, and wherein second threshold saliency score is lower than the first threshold saliency score.

13. An image processing method, comprising:
obtaining a first image;
receiving a first crop request, wherein the first crop request comprises: first target dimensions, form which a first aspect ratio and a first orientation may be determined;
determining a first region of interest (ROI) for the first image;
determining a first cropped region for the first image based on the first crop request, wherein the first cropped region has a first width, a first height, and a first location within the first image, wherein the first cropped region encloses a first subset of content in the first image, and wherein at least one of the first width, first height, and first location are determined, at least in part, to maximize an amount of overlap between the first cropped region and the first ROI;
determining a first score for the first cropped region, wherein the first score is determined based, at least in part, on an amount of overlap between the first cropped region and the first ROI; and
cropping the first cropped region from the first image when it is determined the first score is greater than a minimum score threshold.

14. The method of claim 13, wherein the first crop request further specifies a first focus region, wherein the first focus region comprises a specified portion of the determined first cropped region, and wherein the first score is further determined based, at least in part, on an amount of the first ROI that is enclosed by the first focus region.

15. The method of claim 13, wherein the first ROI is determined based on one or more of: saliency maps, object detection boxes, face detection boxes, or face recognition boxes generated based on the first image.
